# EUROPEAN PATENT SPECIFICATION

(11) **EP 2 051 468 B1**
(45) Date of publication and mention of the grant of the patent: **24.10.2012**
(21) Application number: 07012405.2
(22) Date of filing: 25.06.2007
(51) Int. Cl.: H04L 29/06, G06F 21/00

(54) **Method, data processing device and computer network for anomaly detection**
Verfahren, Datenverarbeitungsvorrichtung und Rechnernetzwerk zur Erkennung von Anomalien
Procédé, dispositif de traitement de données et réseau informatique pour une détection d'anomalies

(43) Date of publication of application: 22.04.2009
(73) Proprietor: Deutsche Telekom AG, 53113 Bonn (DE)
(72) Inventor: Bye, Rainer, 10247 Berlin (DE); Luther, Katja, 13189 Berlin (DE); Alpcan, Tansu, Dr., 10625 Berlin (DE); Albayrak, Sahin, Prof. Dr., 10587 Berlin (DE); Müller, Achim, 10319 Berlin (DE)
(74) Representative: Kampfenkel, Klaus

(56) References cited:
- WO-A-03/029934
- KATJA LUTHER: "Entwurf eines Künstlichen Immunsystems zur Netzwerküberwachung auf Basis eines Multi-Agenten-Systems" MASTER'S THESIS, TU BERLIN, [Online] 2006, XP002517533 Retrieved from the Internet: URL:http://www.dai-labor.de/fileadmin/file s/publications/Diplomarbeit_KL.pdf>
- GOEL ET AL: "On decision support for distributed systems protection: A perspective based on the human immune response system and epidemiology" INTERNATIONAL JOURNAL OF INFORMATION MANAGEMENT, ELSEVIER SCIENCE LTD, GB, vol. 27, no. 4, 12 June 2007 (2007-06-12), pages 266-278, XP022114138 ISSN: 0268-4012
- PAUL K HARMER ET AL: "An Artificial Immune System Architecture for Computer Security Applications" IEEE TRANSACTIONS ON EVOLUTIONARY COMPUTATION, IEEE SERVICE CENTER, NEW YORK, NY, US, vol. 6, no. 3, 1 June 2002 (2002-06-01), XP011072894 ISSN: 1089-778X

## Description

### Field of the invention

The invention relates to communication networks in general, and especially to a method, a data processing device and a computer network for detecting anomalous operation within a computer network, in particular due to a malicious intrusion from outside the network.

### Background of the invention

Malicious software or malware is known as software which is designed to attack computer systems, wherein the malware is spread via a communication network to which the computer system is connectable. Currently attackers mostly target personal computers (PCs) in order to masquerade, eavesdrop, violate authorization, alter or destroy, manipulate, forge and sabotage data. This mostly happens by using or releasing certain malicious software (malware), which can be categorized for instance as Trojan horses, viruses or worms. Different techniques are used to defend and secure systems potentially under attack, like for instance white list based firewall software, black list based anti-virus software and anomaly based intrusion detection and intrusion prevention systems (IDS/IPS).

The great majority of intrusion detection systems use signature-based approaches to detect attacks. This however does not allow the detection of zero-day attacks since signatures can only be generated retrospectively, i.e., after an attack has been carried out at least once.

Anomaly-based detection is a viable alternative to signature-based approaches when attempting to detect abnormal system behavior caused by successful intrusions.

From US 6 711 615 B2 for instance a method of network surveillance is known which comprises a hierarchical event monitoring and analysis within an enterprise network, wherein by network monitors suspicious network activity is detected based on analysis of network traffic data, for which purpose a signature-based inference unit and a statistical anomaly-detection unit is provided in the monitor. Reports of the suspicious activity are generated by the network monitors which are automatically received by hierarchical monitors.

The weak point of anomaly-based systems however is the high rate of false positives, meaning that alarms are often issued when the system in fact behaves normally. Consequentially, this leads to high maintenance costs and, even worse, to situations where correct warnings are ignored by users due to the high frequency of false alarms.

The utilization of Artificial Immune Systems (AIS) for network surveillance is for instance described in the master's thesis by K. Luther "Entwurf eines Künstlichen Immunsystems zur Netzwerküberwachung auf Basis eines Multi-Agenten-Systems", TU Berlin, 2006.

"On decision support for distributed systems protection: A perspective based on the human immune response system and epidemiology" by S. Goel et al., International Journal of Information Management, Elsevier Science Ltd., GB, vol. 27, No. 4, June 12, 2007, pages 266-278, relates to an AIS-based network security system in which virus detection is done through random packet inspection in order to limit the resources used for packet scanning. Multiple immune systems in a neighborhood share information with each other so that the detection of viruses in a neighborhood can be used as a trigger to increase the sampling rate of the packet inspection.

In WO 03/029934 A1 an agent-based intrusion detection system is described, wherein individual agents share attack signatures and solutions via a message exchange mechanism and wherein a global internal measurement of the overall health of the group of agents may be used as an indicator of a possible attack. However, the occurrence of false positives remains to be a problem.

It is therefore an object of the present invention to show a new and improved way for detecting anomalous behavior within a computer network, wherein in particular the rate of false positive detections is reduced.

### Summary of the Invention

The inventive solution of the object is achieved by each of the subject matter of the respective attached independent claims. Advantageous and/or preferred embodiments or refinements are the subject matter of the respective attached dependent claims.

For detecting an anomalous operation within a computer network which comprises multiple interconnected data processing nodes the inventive method proposes a cooperative approach, wherein by a first data processing node of the computer network a first status value is determined, which is a measure for the probability of an anomalous operation and by at least one second data processing node of the computer network a second status value is determined, which also is a measure for the probability of an anomalous operation. For achieving cooperation said second status value is transmitted from the at least one second data processing node to the first data processing node via a peer-to-peer communication, from said first and second status values a third status value is determined by the first data processing node, and in dependence of the third status value it is determined whether an anomalous operation has occurred.

For determining the third status value an average value of the second status values is determined, the first status value is weighted with a first weighting factor, the average value is weighted with a second weighting factor, and the weighted first status value and the weighted average value are added, thereby obtaining the third status value.

The first and second data processing nodes typically are stationary computers, but can also be provided as any other devices capable of data processing, as for instance mobile computing devices or smartphones. The data processing nodes accordingly can be interconnected utilizing any kind of suitable communication means, as for instance a LAN, a WLAN, Bluetooth or a cellular network based on GSM or UMTS.

For determining the first status value typically the network traffic of the first data processing node is monitored. Hence, the first status value in particular is a measure for the probability of an anomalous operation of the first processing node. In order to reduce false positive detections of anomalous operation a cooperation with other data processing nodes of the computer network is proposed, resulting in said third status value which also incorporates the second status values received from the second data processing nodes and deciding in dependence of this third value whether there is an anomalous operation. This profits from the fact that

Since many malicious attacks of the computer network result in the spreading of certain malware within the computer network, the probability that a given data processing node which detects an anomalous network activity is infected rises if also other data processing nodes detect an anomalous network activity. Therefore, by the cooperative approach of the described method the detection accuracy is increased, thereby reducing false positive detections.

For an ongoing detection the above described steps of determining the first status value, determining and transmitting the at least one second status value, determining from the third status value and deciding in dependence of the third status value whether an anomalous operation has occurred preferably are repeated at pre-defined times, in particular with a pre-defined frequency.

The first status value can in principle be determined by means of any suitable anomaly detection algorithm, or even by means of a signature-based detection algorithm. With special advantage however determining said first status value is performed by means of an algorithm based on an artificial immune system (AIS).

With special advantage therefore the method further comprises the step of storing in the first data processing node at least one set of reference vectors which are associated with anomalous operation. The inventors found out that for determining these reference vectors a negative selection algorithm is especially suitable.

Accordingly, each set of reference vectors preferably is determined initially by the first processing node by performing a negative selection. For this purpose, by monitoring network traffic during a training phase, training data is determined and stored which represents normal system behavior, wherein said training data comprises multiple traffic data vectors. Until the set of reference vectors reaches a pre-defined number of reference vectors, repeatedly random data vectors are generated and compared with each traffic data vector of said training data. If the respective random data vector matches none of the traffic data vectors of said training data, it is added to the set of reference vectors, wherein vectors are defined to match if their distance falls below a pre-defined threshold, wherein the distance is determined by means of a pre-defined distance measure.

Based on the reference vectors which represent the abnormal the first data processing node preferably determines the first status value by monitoring network data traffic, determining at least one traffic data vector from the monitored network traffic, and determining the distances between each traffic data vector and each reference vector of a respective one of the stored sets of reference vectors by means of a pre-defined distance measure.

The AIS approach of measuring the distance between traffic data vectors and reference vectors which represent the abnormal is especially well suited for a vector space associated with normal operation that is not arranged in a small amount of big clusters but in a lot of small clusters which is typical for the network communication of a computer network.

Each of the vector components of a determined traffic data vector is associated with a respective pre-defined feature of the monitored network data traffic. The reference vectors, and also the random vectors generated in the above described training phase for initially determining the reference vectors, have the same structure and accordingly are provided as feature vectors with vector components which are associated with the same pre-defined features of network data traffic.

Such features can for instance comprise address information like used ip addresses or ports or statistical information like number of connections, number of packets, number of used ports or number of port scans.

Since using a high number of features for each feature vector results in a correspondingly large vector space which in turn results in less meaningful distances between vectors, preferably two or more feature vectors are used with respective different features of network data traffic. Accordingly, with advantage at least two different sets of reference vectors are stored and at least two different traffic data vectors are determined.

Examples of suitable distance measures are the hamming distance and the euclidian distance, wherein in the case of the hamming distance the vectors preferably are representable as binary strings.

In a preferred embodiment of the method the first status value is represented by a counter which is incremented for each reference vector for which a distance to the respective traffic data vector is determined to be below a pre-defined threshold. With advantage the counter is incremented by a value which is inversely proportional to said distance, so that a reference vector to which the traffic data vector has a high affinity, i.e. a small distance, has a greater effect.

Since it is impractical to store and compare reference vectors which cover the complete vector space, with advantage a continuous replacement of reference vectors is provided. For this purpose each reference vector of each set of reference vectors is associated with a pre-defined lifetime after which it is deleted from the set and replaced by a new reference vector which is determined by randomly generating data vectors and comparing these with the stored training data as described above.

Another advantageous refinement of the utilized AIS is clonal selection, wherein a reference vector which was detected to match a traffic data vector is cloned. The method accordingly with advantage further comprises the steps of selecting at least one reference vector for which a distance to a traffic data vector was determined to be below a pre-defined threshold, generating at least one altered vector by altering each vector component of said selected reference vector by a random amount which lies within a pre-defined range, and adding said altered vector to the respective set of reference vectors.

The status values are a measure of the probability of an overall anomalous operation of the computer network. In particular, however, the first and also the third status value are measures of the probability of an anomalous operation of the first data processing node. Therefore preferably the first status value which is determined by the first data processing node is associated with a stronger weight, i.e. the first weighting factor is larger than the second weighting factor.

For the third status value to be of the same scale as the first and second status values, the sum of the first and the second weighting factor preferably equals 1. Examples of suitable ratios of first to second weighting factor are 60:40, 70:30, 80:20 and 90:10.

The decision whether an anomalous operation has occurred advantageously is made by comparing the third status value with a pre-defined threshold, wherein anomalous operation is defined to have occurred, when the third status value exceeds said threshold. On detection of anomalous operation preferably an alarm is raised. Accordingly, the method with advantage comprises generating an alarm signal by the first data processing node when the third status value exceeds a pre-defined threshold.

For practical purposes said alarm signal is transmitted from the first data processing node to a central administration node, where an administrator of the computer network can check whether an alarm has been raised.

Data traffic vectors which do not raise an alarm, i.e. resulting in a third status value which lies below the pre-defined threshold, are advantageously included into the stored training data, thereby enabling continuous training and adaptation to variations in the environment.

The first and second data processing nodes preferably are of a similar setup, so that each of the second data processing nodes can also act as a first data processing node.

Each of the second status values therefore preferably is determined by the respective second data processing node in a way as described above with respect to determining either the first or the third status value by the first data processing node.

Preferably the first and second data processing nodes exchange their status values in regular time intervals, thereby achieving a cooperative effect. The transmission accordingly takes place automatically, for instance triggered by a timer of the respective data processing node. In a further preferred embodiment of the method also an event-driven cooperation is proposed. If the first data processing node determines that an anomalous operation has occurred, in this embodiment it in response automatically transmits the third status value and the respective reference vectors associated with the anomalous operation to each of the second data processing nodes. The second data processing nodes then preferably include the received reference vectors into their respective sets of reference vectors.

An inventive data processing device adapted for detection of anomalous operation within a computer network comprises a network interface which is adapted to receive by means of a peer-to-peer communication from at least one pre-defined other data processing device a second status value which is a measure for the probability of an anomalous operation within the computer network, a monitoring unit for monitoring network data traffic, at least one anomaly detection unit adapted to determine a first status value which is a measure for the probability of an anomalous operation within the computer network, a collaboration unit adapted to determine a third status value from said first status value and said second status values, and determining means for determining in dependence of said third status value whether an anomalous operation has occurred.

As already described above with respect to the method, the first and third status values preferably are a measure for the probability of an anomalous operation of the inventive data processing device itself, while the at least one second status value is a measure for the probability of an anomalous operation of the respective at least one other data processing device.

Each anomaly detection unit and the collaboration unit preferably are respectively adapted to automatically determine first and third status values at pre-defined times:

The anomaly detection units advantageously utilize an algorithm based on an artificial immune system. Therefore with advantage storage means are provided for storing for each anomaly detection unit a set of reference vectors which are associated with anomalous operation. Each anomaly detection unit preferably is adapted to determine traffic data vectors from monitored network traffic, wherein each of the vector components of said traffic data vectors are associated with a respective pre-defined feature of the monitored network data traffic. Further, each anomaly detection unit preferably is adapted to determine the distances between a respective traffic data vector and each reference vector of the respective one of the stored sets of reference vectors by means of a pre-defined distance measure.

In order to keep the vector dimensions low with advantage at least two anomaly detection units are provided, wherein each is adapted to determine data traffic vectors with features making up the vector components.

In a preferred embodiment each anomaly detection unit comprises a counter, wherein the counter reading represents the first status value, and each anomaly detection unit is adapted to increment said counter for each reference vector for which a distance to the respective traffic data vector is determined to be below a pre-defined threshold, wherein preferably each anomaly detection unit is adapted to increment said counter by a value which is inversely proportional to said distance.

Furthermore, the device with advantage is adapted to perform a monitoring phase in which network data traffic associated with normal operation is monitored and stored as training data, said training data comprising multiple traffic data vectors. The device further preferably is adapted to perform a training phase, in which repeatedly random data vectors are generated, compared with each traffic data vector of said training data and added to the respective set of reference vectors, if it matches none of the traffic data vectors of said training data, wherein vectors are defined to match if their distance falls below a pre-defined threshold, until the set of reference vectors comprises a pre-defined number of reference vectors. By performing said monitoring and training phases the device is adapted to determine each set of reference vectors.

The device further preferably is adapted to delete each reference vector of each set of reference vectors after an associated pre-defined lifetime and to replace it by a new reference vector which is again determined in the above described way.

In another preferred embodiment the device is adapted for clonal selection for reference vectors, wherein accordingly each anomaly detection unit is adapted to select at least one reference vector of the respective set of reference vectors for which a distance to a traffic data vector was determined to be below a pre-defined threshold, generate an altered vector by altering each vector component of said selected reference vector by a random amount which lies within a pre-defined range, and add said altered vector to the respective set of reference vectors.

The collaboration unit of the device is adapted to determine said third status value by determining an average value of said second status values, weighting the first status value with a first weighting factor, weighting said average value with a second weighting factor, and adding the weighted first status value and the weighted average value thereby obtaining said third status value.

Further, the device advantageously is adapted to generate an alarm signal when the third status value exceeds a pre-defined threshold and to preferably transmit the alarm signal to a central administration node of the computer network.

With special advantage the device is adapted to transmit the first and/or the third status value by means of a peer-to-peer communication to at least one pre-defined other data processing device, in particular to all other similarly equipped devices within the computer network. These other data processing devices in turn use these received status values as second status values for determining their third status value. Typically the inventive device is adapted to transmit the first and/or the third status value in regular time intervals, controlled for instance by a respective timer.

In another preferred embodiment the inventive device is adapted to transmit the third status value on an event-driven basis. Accordingly the device with advantage is adapted to automatically transmit, when determining that an anomalous operation has occurred, the third status value and the respective reference vectors associated with the anomalous operation to at least one pre-defined other, especially similarly equipped, data processing device. Accordingly, the device preferably also is adapted to include at least reference vector received from another device into at least one of its stored sets of reference vectors.

Any other refinement described above with respect to the inventive method also applies to the inventive data processing device.

An inventive computer network with multiple data processing nodes which for the purpose of data communication are interconnected comprises at least two of the above described data processing nodes as anomaly detection devices.

For supervision by an administrator the computer network further preferably comprises a central administration node adapted to receive alarm signals from said anomaly detection devices.

To enable the above described cooperation the anomaly detection devices are advantageously adapted to communicate by means of peer-to-peer communication. For the peer-to-peer communication with advantage each anomaly detection device keeps a list of peers which preferably is automatically updated. For this purpose each of the anomaly detection devices is adapted for operation as a master node for the peer-to-peer communication, wherein in said master node it is adapted to provide a list of all anomaly detection devices which are connected to the computer network.

### Brief Description of the Figures

It is shown in
- Fig. 1: a schematic view of an exemplary embodiment of a data processing device connectable to a computer network which is adapted for detecting anomalous operation of the computer network,
- Fig. 2: a schematic view of a preferred embodiment of a computer network comprising multiple data processing devices as shown in Fig. 1, and
- Fig. 3: schematically a peer-to-peer communication between multiple data processing devices as shown in Fig. 1.

### Detailed Description of the Invention

Subsequently, preferred but exemplar embodiments of the invention are described in more detail with regard to the figures.

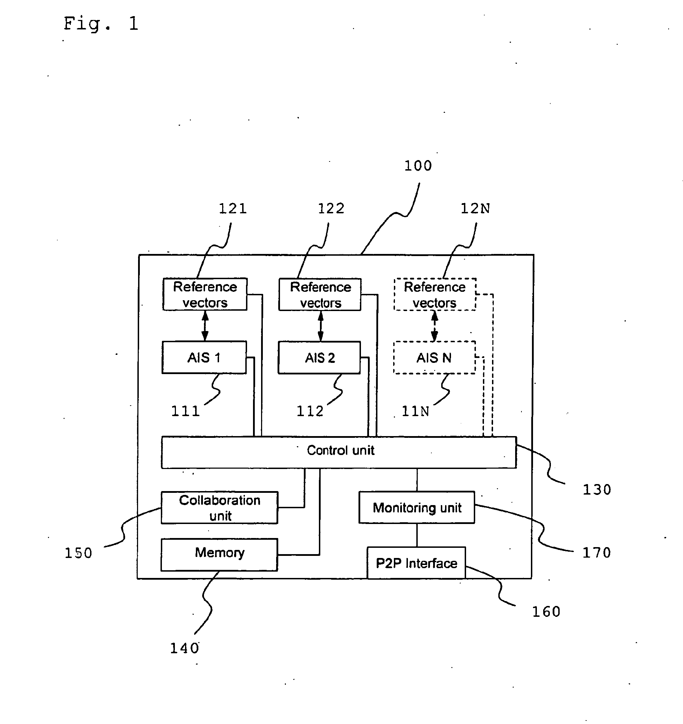

In Fig. 1 a schematic view of an exemplary embodiment of a data processing device 100 is shown which is adapted for detecting anomalous operation within a computer network to which it is connected.

For anomaly detection the device comprises two anomaly detection units 111 and 112, which operate on the basis of an artificial immune system (AIS). A respective set of reference vectors 121 and 122 is provided for each of the anomaly detection units 111 and 112 which is associated with an anomalous operation. In the following reference vectors are also referred to as detectors as they are used to detect an anomalous operation and anomaly detection units are also referred to as AIS agents as they are based on an artificial immune system. With advantage also an arbitrary number of further anomaly detection units and respective sets of reference vectors can be provided, which is indicated by reference numerals 11N and 12N.

The device 100 is provided as a computer and accordingly comprises a control unit 130 with a micro-processor for controlling the device 100 and also a memory 140 which for instance can comprise RAM and hard disk memory.

For communication purposes the device 100 is provided with a network interface 160, which is adapted for peer-to-peer communication. By means of a monitoring unit 170 the network data traffic can be monitored. From the monitored network data traffic pre-defined features are extracted for forming traffic data vectors which are provided to the anomaly detection units 111 and 112 which compare these with the respective reference vectors of the associated sets of reference vectors 121 and 122. By this comparison a first status value is determined which is a measure for the probability of an anomalous operation, in particular an anomalous operation of device 100.

By means of collaboration unit 150 from said first status value and from second status values received via network interface 160 from other devices, which are similarly equipped as device 100, a third status value is determined, in dependence of which it is determined whether an anomalous operation has occurred.

This third status value also is a measure for the probability of an anomalous operation, in particular an anomalous operation of device 100. Since the second status values represent the status of anomalous operation of other devices of the computer network to which device 100 is connected, the third status value also reflects the health status of these other devices. Accordingly the second status values can inhibit or amplify the status represented by the first status value, thereby reducing the rate of false positive detections of anomalous operation.

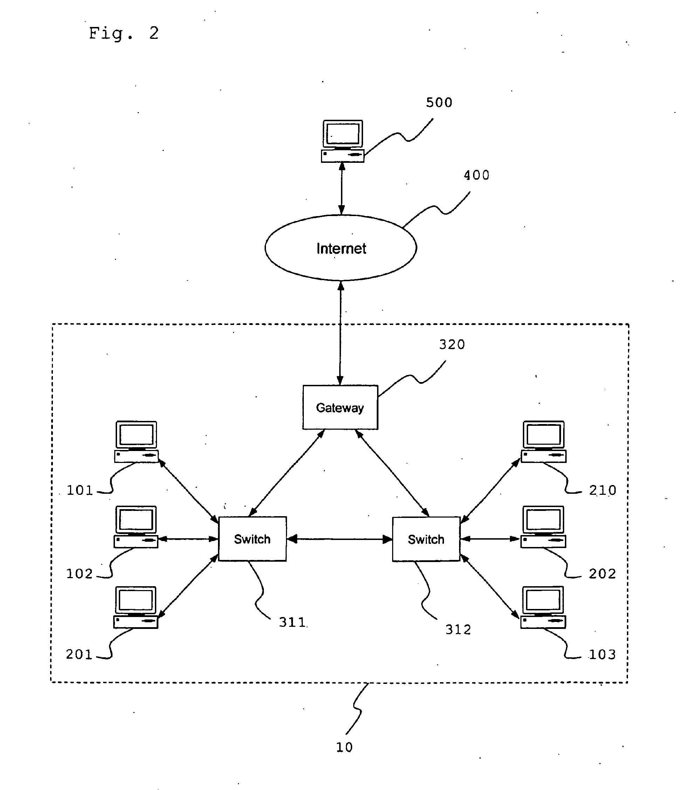

In Fig. 2 an exemplar embodiment of an inventive computer network 10 is shown which comprises three computers 101-103, acting as anomaly detecting devices, which are equipped as the device 100 shown in Fig. 1 and accordingly are adapted for detecting anomalous operation within the computer network 10.

The devices 201, 202 and 210 of the computer network 10 are not adapted for detecting anomalous operation. Device 210 however is provided as a central administration device for the computer network 10, to which alarm signals from the anomaly detection devices 101-103 are transmitted for supervision by an administrator.

In the shown embodiment the devices 101-103, 201, 202 and 210 are interconnected by means of switches 311 and 312. For accessing the Internet 400 a gateway 320 is provided which is connected to both switches 311 and 312. Via the Internet 400 an attacking computer 500 can try to infiltrate the computer network 10, for instance by using or releasing certain malicious software (malware) like Trojan horses, viruses or worms.

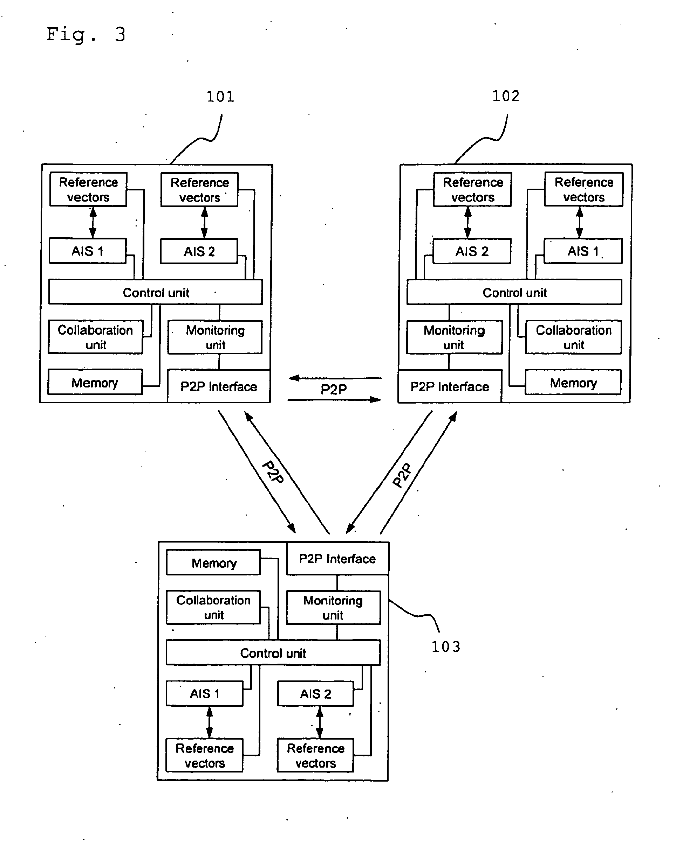

For detecting such an attack the computers 101-103 are respectively equipped with anomaly detection units and also with collaboration units which enable a cooperative approach to anomaly detection. For cooperation the computers 101-103 communicate by means of a peer-to-peer communication as schematically shown in Fig. 3.

In the following the AIS architecture is described in more detail.

As the basic algorithm for the selection of the detectors for given training data the negative selection algorithm is used. The main idea of the negative selection algorithm is to produce detectors randomly and compare them to the normal patterns obtained during training. Every detector that matches to these normal patterns is eliminated, and hence, the remaining detectors recognize only abnormal patterns. A pseudocode for the negative selection algorithm is shown below:

```
SET DetectorSet as the set of Detectors
SET NormalSet from the training data
SET NumberDetectors as the number of Detectors
    WHILE DetectorSet size smaller than NumberDetectors
       CREATE a Detector
       FOR each featureVector in the NormalSet
           COMPARE the Detector with FeatureVector
           IF they are similar
              DELETE Detector
           ELSE
              PUT Detector in DetectorSet
```

The feature vectors are composed of the statistics of the network traffic on one client. A detailed description of the feature vectors is provided below with respect to performed simulations. After the learning period the new feature vectors are presented to the remaining detectors and the distance between the feature vectors and the detectors is computed. If the distance is smaller than the threshold of the detector, a counter is incremented. When the counter reaches a pre-defined threshold, an alarm is raised and in the next step clonal selection takes place.

Clonal selection describes the selection of the detectors that recognize the abnormal patterns. The detectors are continuosly compared to the occurring patterns, and if one is similar to such a pattern, it clones itself. The similarity between a detector and a feature vector is called affinity and the detectors with the highest affinity are selected and cloned. Alternatively, the detectors mutate for a better cover of the nonself space. Mutation means that they do not only produce copies of themselves but also copies with little differences. Preferably the mutation rate is inversely proportional to the affinity of the detector. In the described embodiment clonal selection therefore means that the detector is copied but with small differences in the values of the feature vector.

For detecting anomalies a simple anomaly detection scheme using only the positive selection is utilized in the described embodiment. If a detector does not reach its threshold during a pre-defined life period it is eliminated from the detector set and a new detector is created. The data for the feature vectors is collected by a monitoring component of the agent. The agent collects the packet data and creates feature vectors continuously. During the training period, each match between a detector and presented patterns increments a detector-specific counter. If a certain threshold is reached, then the detector is eliminated, i.e. negative selection is performed. The distance between the detectors and the feature vectors is computed by the hamming distance.

The inventors have discovered that several hosts 101-103 in a network 10 running instances of the presented AIS architecture can achieve better detection performances if they cooperate by sharing their detection results and own status. In the described embodiment a P2P infrastructure is proposed allowing different AIS agents to collaborate for this purpose.

P2P systems in general can be classified into three categories: purely decentralized, partially centralized, and hybrid decentralized. The P2P infrastructure used in the described embodiment is based on a hybrid decentralized architecture. The nodes are equal in their abilities but one node acts always as the "super node" for the purpose of the initial look-up of other peers containing AIS systems. Apart from this, the clients communicate with all other peers autonomously. Next the course of action for an AIS client that wants to share information with the other peers is described. The central entity is denoted as the server and the other AIS agents are simply called clients or peer nodes. The PEER data structure contains the IP address of the peer, a counter for maintenance purposes and data applicable to the system using the P2P infrastructure.

In the following a pseudocode for the peer-to-peer communication is given:

```
    List of peers peerList
    INITIALIZATION
        Send to server Register Message
    SEND UPDATE MESSAGE
        Send to peers in list Update Message
    RECEIVE MESSAGE
        CASE Message Type OF
           Peer list Message from server:
              Add peers to own list
           Update Message:
              FOR all peers in list
                 IF sender of Message equals peer
                    actualize peer with Update
                 ELSE
                    increase age counter
                    IF age counter > threshhold
                       delete peer from list
                    IF sender of Message was not in list
                       add sender to peer list
           Quit Message:
              remove sender from peer list
           Request List Message:
              Send peer list to client
    DISCONNECT
     Send to server Quit Message
     Send to peers in list Quit Message
```

In the following the respective parts of the pseudocode are described:

### Initialization

A node that wants to connect to the P2P overlay network contacts the server with a register message.

### Send Update Message

Informs all other client nodes about interesting updates such as the status of the detection units. We refer to the next section for details regarding the content of messages exchanged between AIS agents.

### Receive Message

Four types of messages are handled:
1. In the case of a peer list from the server message the node is added to the client nodes list.
2. Upon receipt of an update message the state or information about a node in the peer list is actualized. For all the other nodes, an age counter is incremented. If the counter reaches a specific threshold indicating that a node has not sent update messages in a certain time interval it is deleted from the list. This is important when a client is not able to disconnect properly. This approach can be used for the maintenance of the list as periodic messages are an essential part of the system. If the sender of the update message is not an element of the peer list, it is added automatically to that list.
3. A quit message results in the deletion of the sending node from the list.
4. The request list message is answered by transmitting the list of nodes to the requestor.

### Disconnect

A message from a node to the central server but also to the clients in the peer list that the agent wants to disconnect.

In the described embodiment it is assumed that the computer network 10 is a subnetwork owned by a company or a university department. Therefore, there is a valid range of known IP addresses in such subnetworks. If an outside attacker tries to carry out a spoof attack, i.e., manipulates the packets with IP addresses from inside the network, this can be easily detected at the gateway 320 to other networks respectively the Internet 400. Thus, this mechanism provides some protection from outside attackers that want to be added to the peer list and falsify detection results.

The success of a biological immune system results from the cooperation of its various components. An immune system response is initiated only if different events take place concurrently. In the described distributed environment a similar effect is achieved by using a variety of feature vectors and exploiting the cooperation between the host based AIS agents. Every AIS agent hence is associated with a status metric that represents the possibility of infection, i.e. anomaly, which is shared through the P2P system described above.

A second possibility of cooperation appears when a host detects an anomaly. If its own status reaches a pre-defined threshold it sends a message to his neighbors containing its status as well as the actual detectors associated with the alarm. Such messages are called event-driven. If a host gets an event-driven message, then it adds the new detectors to his own detector set and updates its own status. The new status is computed as a function of the own status after running the detection module and the status obtained from the received messages. However, in this process the agents give a lower weight to the status of the neighbors than their own.

The inventors performed simulations to show the benefit of the inventive method. For this purpose as part of a characterization of "typical" client behavior daily TCPDumps of several Windows workstations on a university subnetwork have been recorded. After an analysis of the captured traffic the UDP background traffic on an example network consisting of idle clients has been modelled.

The UDP client background profile is given below:

| Port Number | Protocol | Packets per hour |
|---|---|---|
| 88 | Kerberos | 3 |
| 123 | NTP | 1 |
| 137 | NETBIOS Name Service | 1 |
| 138 | NETBIOS Datagram Service | 2 |
| 389 | CLDAP | 6 |

The protocols chosen and summarized above include NETBIOS which is used for name and session services, NTP for clock synchronizing, Kerberos as standard authentication protocol for Windows and CLDAP for X.500 directory access. NETBIOS is the only protocol that uses broadcast messages, the others are unicast. The traffic volume in inactive mode consists of 13 packets per hour and host. In addition, the clients produce HTTP traffic to represent user interaction. A higher usage of HTTP traffic by the clients has been modelled at specific times per day referring to beginning of the workday, after the lunch break, and after the working hours.

For modeling the behavior of the client timer based profiles are used, wherein HTTP is faithfully emulated. For the UDP background traffic UDP-packets with correct ports and behavior (unicast, broadcast) are used, but without meaningful content. The content of single UDP-packets does not play an important role because packet flows, used ports, and IP addresses are considered for the analysis without resorting to a deep inspection approach. Each client has a defined subset of ports where it accepts packets. The packets arriving on these ports are regarded as valid connection attempts. The following ports for UDP-based services are used: 123 (NTP), 137 (NETBIOS Name Service), 138 (NETBIOS Datagram Service) and 1500 (P2P communication) .

The P2P infrastructure is implemented based on the UDP-protocol provided by a network simulation tool. Hence, the port 1500 is reserved for it. Valid TCP-ports are not considered, because connections in the application layer protocol HTTP are initiated on the client side. Therefore, no client needs to listen to TCP connection attempts. In the simulations, each client measures incoming and outgoing connections using a network statistic component which records data such as the used ports, the number of packets, and whether a connection attempt was valid or not. Feature vectors are extracted out of this data serving as an input for the AIS.

Two scenarios were simulated where each client executes the client-profile according to a global timer and wherein some of the clients run an AIS agent. Disabling respectively enabling the P2P infrastructure allows the comparison of the detection results between the cooperative and non-cooperative approaches.

The AIS on the hosts has three different phases: monitoring, training, and detecting. In the monitoring phase the measuring component of the clients samples all incoming and outgoing packets. The feature vectors are created and stored in previously specified time intervals. The used feature vectors are given below:

| Feature vector 1 | Feature vector 2 |
|---|---|
| daytime | daytime |
| main IP addresses TCP | number of TCP connections |
| main IP addresses UDP | number of UDP packets |
| main ports | number of used ports |
| | number of port scans |
| | number of TCP packets |

During the training period a set of detectors is created and compared to the training data collected in the monitoring phase. As described above all detectors matching a feature vector of the training set are deleted and new detectors are created. The detectors are not created in a completely randomized fashion because the space to be covered would be huge. In the simulation environment a limited range of IP addresses was used, so that the space of possible addresses is reduced. The same applies to the ports. Hence, only port numbers between 1 and 450 are used. An interval of 20 seconds with a multiplicator of 50 is chosen which corresponds to 16 minutes in real-time.

The detectors are compared during the detection period with the incoming feature vectors created by the same statistic component as the one in the monitoring period. If one or more detectors match a feature vector, the status of the AIS is incremented proportional to the affinity and the number of matching detectors. If the status reaches a threshold, an alarm is issued. The feature vectors that did not raise an alarm are stored and used for future training, so that the system is adaptive to variations in the environment.

The cooperation of the AIS in the network is based on the shared status. After every status calculation each AIS component sends its status and a counter to the other peers through the P2P system and updates his own status according to the incoming status of the adjacent peers. Every client uses only the most recent status during the update, i.e., they are ignored if the incoming status values are not up to date. For this purpose for instance a timestamp can be provided.

The two simulated scenarios are different attack scenarios in a typical subnetwork such-as a department of a university or a small company.

The first scenario relates to a compromised host in a subnetwork. In this scenario, one of the client computers has been compromised by an attacker. This means a vulnerability of the client has been exploited and the attacker has complete access to the client's resources. According to the five Ps "Probe, Penetrate, Persist, Propagate and Paralyze", the attacker tries to persist on the compromised machine, for example by installing a backdoor. The next step is the "Propagate" stage where the subnetwork is scanned for other further vulnerabilities. In this scenario, a port scanning profile is modeled that extends the previously defined client profile. This profile includes a scanning of several ports on all clients in the whole subnetwork over a variable time period.

The second scenario relates to detecting a worm attack. In this scenario one host is infected by a worm that spreads via only one UDP packet like the infamous Slammer worm did. The worm uses only a single port (port 137). However, if it reaches a host that provides the port, the host is infected with a probability of 0.7. If a client is infected by the worm, it starts to send the same UDP packet to randomly created IP addresses and tries to infect other clients.

As a result of the simulation the detection rate and false positive rates are given below for a single AIS and the collaborative approach in both scenarios described above.

| Scenario | false positives | true positives |
|---|---|---|
| 1, single | 25% | 79% |
| 1, cooperative | 18% | 100% |
| 2, single | 16% | 54% |
| 2, cooperative | 10% | 57% |

As can be seen from the simulation results, the cooperative approach to detecting anomalous operation within a computer network proposed by the invention achieves not only an increased accuracy with respect to true positives, but also a significant reduction of false positive rates.

## Claims

1. A method for detecting an anomalous operation within a computer network (10) with multiple data processing nodes (101-103, 201, 202, 210) which for the purpose of data communication are interconnected, wherein
a) by a first data processing node (101; 102; 103) of the computer network (10) a first status value is determined, which is a measure for the probability of an anomalous operation,
b) by at least one second data processing node (102, 103; 101, 103; 101, 102) of the computer network (10) a second status value is determined, which is a measure for the probability of an anomalous operation,
c) said second status value is transmitted from the at least one second data processing node (102, 103; 101, 103; 101, 102) to the first data processing node (101; 102; 103) via a peer-to-peer communication,
d) from said first and second status values a third status value is determined by the first data processing node (101; 102; 103), and
e) in dependence of the third status value it is determined whether an anomalous operation has occurred, **characterized in that** the step of determining said third status value comprises the steps of
- determining an average value of said second status values,
- weighting the first status value with a first weighting factor,
- weighting said average value with a second weighting factor, and
- adding the weighted first status value and the weighted average value thereby obtaining said third status value.

2. The method of claim 1, wherein steps a) through e) are repeated at pre-defined times.

3. The method of claim 1 or 2, wherein determining said first status value is performed by means of an algorithm based on an artificial immune system.

4. The method of claim 3, further comprising the step of storing in the first data processing node at least one set of reference vectors which are associated with anomalous operation,
wherein the step of determining said first status value comprises the steps of
- monitoring network data traffic,
- determining at least one traffic data vector from the monitored network traffic, wherein each of the vector components of said traffic data vector is associated with a respective pre-defined feature of the monitored network data traffic,
- determining the distances between each traffic data vector and each reference vector of a respective one of the stored sets of reference vectors (121, 122, 12N) by means of a pre-defined distance measure.

5. The method of claim 4, wherein at least two different sets of reference vectors (121, 122, 12N) are stored and at least two different traffic data vectors are determined.

6. The method of claim 4 or 5, wherein the pre-defined distance measure is the hamming distance or the euclidian distance.

7. The method of any one of claims 4 to 6, wherein the first status value is represented by a counter and wherein said counter is incremented for each reference vector for which a distance to the respective traffic data vector is determined to be below a pre-defined threshold.

8. The method of claim 7, wherein said counter is incremented by a value which is inversely proportional to said distance.

9. The method of any one of claims 4 to 8, wherein each set of reference vectors (121, 122, 12N) is initially determined by the first processing node (101; 102; 103) by performing the steps of
aa) determining training data representing normal system behavior by monitoring network traffic during a training phase, said training data comprising multiple traffic data vectors,
bb) generating a random data vector,
cc) comparing said random data vector with each traffic data vector of said training data,
dd) adding said random data vector to the set of reference vectors (121, 122, 12N) if it matches none of the traffic data vectors of said training data, wherein vectors are defined to match if their distance falls below a pre-defined threshold, and
ee) repeating steps bb) through dd) until the set of reference vectors (121, 122, 12N) comprises a pre-defined number of reference vectors.

10. The method of claim 9, wherein each reference vector of each set of reference vectors (121, 122, 12N) is associated with a pre-defined lifetime after which it is deleted from the set (121, 122, 12N) and replaced by a new reference vector which is determined by performing steps bb) through ee).

11. The method of any one of claims 4 to 10, further comprising the steps of
- selecting at least one reference vector for which a distance to a traffic data vector was determined to be below a pre-defined threshold,
- generating at least one altered vector by altering each vector component of said selected reference vector by a random amount which lies within a pre-defined range, and
- adding said altered vector to the respective set of reference vectors (121, 122, 12N).

12. The method of any one of the preceding claims, wherein said first weighting factor is larger than said second weighting factor.

13. The method of any one of the preceding claims, wherein the sum of said first and second weighting factors equals 1.

14. The method of any one of the preceding claims,
wherein the ratio of first to second weighting factor essentially equals a ratio selected from the group consisting of 60:40, 70:30, 80:20 and 90:10.

15. The method of any one of the preceding claims, wherein an alarm signal is generated by the first data processing node (101; 102; 103) when the third status value exceeds a pre-defined threshold.

16. The method of claim 15, wherein said alarm signal is transmitted from the first data processing node (101; 102; 103) to a administration monitoring node (210).

17. The method of any one of the preceding claims, wherein each of the second status values is determined by the respective second data processing node (102, 103; 101, 103; 101, 102) as defined by any one of claims 3 to 11 with respect to the first status value.

18. The method of any one of the preceding claims, wherein each of the second status values is determined by the respective second data processing node (102, 103; 101, 103; 101, 102) as defined by any one of claims 12 to 15 with respect to the third status value.

19. The method of any one of claims 4 to 18, wherein the first data processing node (101; 102; 103) transmits, in response to determining that an anomalous operation has occurred, the third status value and the respective reference vectors associated with the anomalous operation to the at least one second data processing node (102, 103; 101, 103; 101, 102).

20. A data processing device (101; 102; 103) adapted for detection of anomalous operation within a computer network (10), comprising
- a network interface (160) which is adapted to receive by means of a peer-to-peer communication from at least one pre-defined other data processing device (102, 103; 101, 103; 101, 102) a second status value which is a measure for the probability of an anomalous operation within the computer network (10),
- a monitoring unit (170) for monitoring network data traffic,
- at least one anomaly detection unit (111, 112, 11N) adapted to determine a first status value which is a measure for the probability of an anomalous operation within the computer network (10),
- a collaboration unit (150) adapted to determine a third status value from said first status value and said second status values, and
- determining means for determining in dependence of said third status value whether an anomalous operation has occurred, **characterized in that**
the collaboration unit (150) is adapted to determine said third status value by
- determining an average value of said second status values,
- weighting the first status value with a first weighting factor,
- weighting said average value with a second weighting factor, and
- adding the weighted first status value and the weighted average value thereby obtaining said third status value.

21. The device of claim 20, wherein each anomaly detection unit (111, 112, 11N) and the collaboration unit (10) are respectively adapted to automatically determine first and third status values at pre-defined times.

22. The device of claim 20 or 21, wherein each anomaly detection unit (111, 112, 11N) is adapted to determine first status values by means of an algorithm based on an artificial immune system.

23. The device of claim 22, adapted to determine for each anomaly detection unit a traffic data vector from monitored network traffic, wherein each of the vector components of said traffic data vector is associated with a respective pre-defined feature of the monitored network data traffic, and comprising storage means for storing for each anomaly detection unit (111, 112, 11N) a set of reference vectors (121, 122, 12N) which are associated with anomalous operation, wherein
each anomaly detection unit (111, 112, 11N) is adapted to determine the distances between a respective traffic data vector and each reference vector of the respective one of the stored sets of reference vectors (121, 122, 12N) by means of a pre-defined distance measure.

24. The device of claim 23, comprising at least two anomaly detection units (111, 112, 11N).

25. The device of any one of claims 23 or 24, wherein each anomaly detection unit (111, 112, 11N) comprises a counter, wherein the counter reading represents the first status value, and is adapted to increment said counter for each reference vector for which a distance to the respective traffic data vector is determined to be below a pre-defined threshold.

26. The device of claim 25, wherein each anomaly detection unit (111, 112, 11N) is adapted to increment said counter by a value which is inversely proportional to said distance.

27. The device of any one of claims 23 to 26, adapted to determine each set of reference vectors (121, 122, 12N) by performing the steps of
aa) determining training data representing normal system behavior by monitoring network traffic during a training phase, said training data comprising multiple traffic data vectors,
bb) generating a random data vector,
cc) comparing said random data vector with each traffic data vector of said training data,
dd) adding said random data vector to the set of reference vectors (121, 122, 12N) if it matches none of the traffic data vectors of said training data, wherein vectors are defined to match if their distance falls below a pre-defined threshold, and
ee) repeating steps bb) through dd) until the set of reference vectors (121, 122, 12N) comprises a pre-defined number of reference vectors.

28. The device of claim 27, adapted to delete each reference vector of each set of reference vectors (121, 122, 12N) after an associated pre-defined lifetime and to replace it by a new reference vector which is determined by performing steps bb) through ee).

29. The device of any one of claims 23 to 28, wherein each anomaly detection unit (111, 112, 11N) is adapted to
- select at least one reference vector of the respective set of reference vectors (121, 122, 12N) for which a distance to a traffic data vector was determined to be below a pre-defined threshold,
- generate an altered vector by altering each vector component of said selected reference vector by a random amount which lies within a pre-defined range, and
- add said altered vector to the respective set of reference vectors (121, 122, 12N).

30. The device of any one of the preceding claims, adapted to generate an alarm signal when the third status value exceeds a pre-defined threshold.

31. The device of any one of the preceding claims, adapted to transmit the first and/or the third status value by means of a peer-to-peer communication to at least one pre-defined other data processing device (102, 103; 101, 103; 101, 102).

32. The device of any one of claims 23 to 31, adapted to transmit, in response to determining that an anomalous operation has occurred, the third status value and the respective reference vectors associated with the anomalous operation to at least one pre-defined other data processing device (102, 103; 101, 103; 101, 102).

33. A computer network (10) with multiple data processing nodes (101-103, 201, 202, 210) which for the purpose of data communication are interconnected,
wherein at least two of said data processing nodes (101-103) are provided as anomaly detection devices according to any one of claims 20 to 32.

34. The computer network of claim 33, further comprising a central administration node (210) adapted to receive alarm signals from said anomaly detection devices (101-103).

35. The computer network of claim 33 or 34, wherein said anomaly detection devices (101-103) are adapted to communicate by means of peer-to-peer communication.

36. The computer network of claim 35, wherein each of said anomaly detection devices (101-103) is adapted for operation as a master node for the peer-to-peer communication, wherein in said master node it is adapted to provide a list of all anomaly detection devices (101-103) which are connected to the computer network (10).

## Patentansprüche

1. Verfahren zur Feststellung eines anomalen Betriebszustands in einem Computernetzwerk (10) mit mehreren Datenverarbeitungsknoten (101-103, 201, 202, 210) welche zum Zweck der Datenkommunikation miteinander verbunden sind, wobei
a) von einem ersten Datenverarbeitungsknoten (101; 102; 103) des Computernetzwerks (10) ein erster Zustandswert bestimmt wird, welcher ein Maß für die Wahrscheinlichkeit eines anomalen Betriebszustands ist,
b) von zumindest einem zweiten Datenverarbeitungsknoten (102, 103; 101, 103; 101, 102) des Computernetzwerks (10) ein zweiter Zustandswert bestimmt wird, welcher ein Maß für die Wahrscheinlichkeit eines anomalen Betriebszustands ist,
c) der zweite Zustandswert von dem zumindest einen zweiten Datenverarbeitungsknoten (102, 103; 101, 103; 101, 102) über eine Peer-to-Peer-Kommunikation an den ersten Datenverarbeitungsknoten (101; 102; 103) übertragen wird,
d) von dem ersten Datenverarbeitungsknoten (101; 102; 103) aus dem ersten und zweiten Statuswert ein dritter Zustandswert bestimmt wird, und
e) in Abhängigkeit von dem dritten Zustandswert bestimmt wird, ob ein anomaler Betriebszustand aufgetreten ist,
**dadurch gekennzeichnet, dass** der Schritt zur Bestimmung des dritten Zustandswerts die folgenden Schritte umfasst:
- Bestimmen eines Durchschnittswerts der zweiten Zustandswerte,
- Gewichten des ersten Zustandswerts mit einem ersten Gewichtungsfaktor,
- Gewichten des Durchschnittswerts mit einem zweiten Gewichtungsfaktor, und
- Addieren des gewichteten ersten Zustandswerts und des gewichteten Durchschnittswerts, um dadurch den dritten Zustandswert zu erhalten.

2. Verfahren nach Anspruch 1, wobei die Schritte a) bis e) zu vorbestimmten Zeitpunkten wiederholt werden.

3. Verfahren nach Anspruch 1 oder 2, wobei das Bestimmen des ersten Zustandswerts mittels eines Algorithmus auf der Grundlage eines künstlichen Immunsystems erfolgt.

4. Verfahren nach Anspruch 3, des Weiteren umfassend den Schritt der Speicherung zumindest einer Menge von Referenzvektoren, die zu einem anomalen Betrieb gehören, in dem ersten Datenverarbeitungsknoten,
wobei der Schritt zur Bestimmung des ersten Zustandswerts die folgenden Schritte umfasst:
- Überwachen des Datenverkehrs im Netzwerk,
- Bestimmen zumindest eines Verkehrsdatenvektors aus dem überwachten Netzwerkverkehr, wobei jeder der Vektorkomponenten des Verkehrsdatenvektors zu einem jeweiligen vorbestimmten Merkmal des überwachten Netzwerkdatenverkehrs zugehörig ist,
- Bestimmen des Abstandes zwischen jedem Verkehrsdatenvektor und jedem Referenzvektor jeweils einer der gespeicherten Mengen von Referenzvektoren (121, 122, 12N) mittels eines vorbestimmten Abstandsmaßes.

5. Verfahren nach Anspruch 4, wobei zumindest zwei unterschiedliche Mengen von Referenzvektoren (121, 122, 12N) gespeichert werden und zumindest zwei unterschiedliche Verkehrsdatenvektoren bestimmt werden.

6. Verfahren nach Anspruch 4 oder 5, wobei das vorbestimmte Abstandsmaß der Hamming-Abstand oder der euklidische Abstand ist.

7. Verfahren nach einem der Ansprüche 4 bis 6, wobei der erste Zustandswert durch einen Zähler dargestellt wird und wobei der Zähler für jeden Referenzvektor, für welchen bestimmt wird, dass sein Abstand zu dem jeweiligen Verkehrsdatenvektor unterhalb einer vorbestimmten Schwelle liegt, inkrementiert wird.

8. Verfahren nach Anspruch 7, wobei der Zähler um einen Wert inkrementiert wrid, welcher umgekehrt proportional zu dem Abstand ist.

9. Verfahren nach einem der Ansprüche 4 bis 8, wobei jede Menge von Referenzvektoren (121, 122, 12N) anfänglich durch den ersten Verarbeitungsknoten (101; 102; 103) durch Ausführen der folgenden Schritte bestimmt wird:
aa) Bestimmen von Trainingsdaten, welche ein normales Systemverhalten darstellen, durch Überwachen des Netzwerkverkehrs während einer Trainingsphase, wobei die Trainingsdaten mehrere Verkehrsdatenvektoren umfassen,
bb) Erzeugen eines Zufallsdatenvektors,
cc) Vergleichen des Zufallsdatenvektors mit jedem Verkehrsdatenvektor der Trainingsdaten,
dd) Addieren des Zufallsdatenvektors zu der Menge von Referenzvektoren (121, 122, 12N),
wenn er mit keinem der Verkehrsdatenvektoren der Trainingsdaten übereinstimmt, wobei definiert ist, dass Vektoren übereinstimmen, wenn deren Abstand unterhalb einer vorbestimmten Schwelle fällt, und
ee) Wiederholen der Schritte bb) bis dd), bis die Menge von Referenzvektoren (121, 122, 12N) eine vorbestimmte Anzahl von Referenzvektoren umfasst.

10. Verfahren nach Anspruch 9, wobei zu jedem Referenzvektor einer jeden Menge von Referenzvektoren (121, 122, 12N) eine vorbestimmte Lebensdauer gehört, nach welcher er aus der Menge (121, 122, 12N) gelöscht und durch einen neuen Referenzvektor ersetzt wird, welcher durch Ausführen der Schritte bb) bis ee) bestimmt wird.

11. Verfahren nach einem der Ansprüche 4 bis 10, des Weiteren umfassend die folgenden Schritte:
- Auswählen zumindest eines Referenzvektors, für welchen bestimmt wurde, dass der Abstand zu einem Verkehrsdatenvektor unterhalb einer vorbestimmten Schwelle liegt,
- Erzeugen zumindest eines modifizierten Vektors durch Modifizieren jeder Vektorkomponente des ausgewählten Referenzvektors um einen zufälligen Betrag, welcher innerhalb eines vorbestimmten Bereichs liegt, und
- Addieren des modifizierten Vektors zu der jeweiligen Menge von Referenzvektoren (121, 122, 12N).

12. Verfahren nach einem der vorhergehenden Ansprüche, wobei der erste Gewichtungsfaktor größer als der zweite Gewichtungsfaktor ist.

13. Verfahren nach einem der vorhergehenden Ansprüche, wobei die Summe des ersten und zweiten Gewichtungsfaktors gleich 1 ist.

14. Verfahren nach einem der vorhergehenden Ansprüche, wobei das Verhältnis des ersten und zweiten Gewichtungsfaktors im Wesentlichen gleich einem Verhältnis ausgewählt aus der Gruppe bestehend aus 60:40, 70:30, 80:20 und 90:10 ist.

15. Verfahren nach einem der vorhergehenden Ansprüche, wobei ein Alarmsignal von dem ersten Datenverarbeitungsknoten (101; 102; 103) erzeugt wird, wenn der dritte Zustandswert eine vorbestimmte Schwelle übersteigt.

16. Verfahren nach Anspruch 15, wobei das Alarmsignal von dem ersten Datenverarbeitungsknoten (101; 102; 103) an einen Verwaltungs-Überwachungsknoten (210) übertragen wird.

17. Verfahren nach einem der vorhergehenden Ansprüche, wobei jeder der zweiten Zustandswerte durch den jeweiligen zweiten Datenverarbeitungsknoten (102, 103; 101, 103; 101, 102) wie durch einen der Ansprüche 3 bis 11 in Bezug auf den ersten Zustandswert definiert bestimmt wird.

18. Verfahren nach einem der vorhergehenden Ansprüche, wobei jeder der zweiten Zustandswerte durch den jeweiligen zweiten Datenverarbeitungsknoten (102, 103; 101, 103; 101, 102) wie durch einen der Ansprüche 12 bis 15 in Bezug auf den dritten Zustandswert definiert bestimmt wird.

19. Verfahren nach einem der Ansprüche 4 bis 18, wobei der erste Datenverarbeitungsknoten (101; 102; 103) in Ansprechen auf die Bestimmung, dass ein anomaler Betriebszustand aufgetreten ist, den dritten Zustandswert und die jeweiligen Referenzvektoren, welche dem anomalen Betriebszustand zugehörig sind, an den zumindest einen zweiten Datenverarbeitungsknoten (102, 103; 101, 103; 101, 102) überträgt.

20. Datenverarbeitungseinrichtung (101; 102; 103), die für die Detektion eines anomalen Betriebszustands innerhalb eines Computernetzwerks (10) geeignet ist, wobei die Einrichtung umfasst:
- eine Netzwerkschnittstelle (160), welche geeignet ist, mittels einer Peer-to-Peer-Kommunikation von zumindest einer vorbestimmten weiteren Datenverarbeitungseinrichtung (102, 103; 101, 103; 101, 102) einen zweiten Zustandswert zu empfangen, welcher ein Maß für die Wahrscheinlichkeit eines anomalen Betriebszustands innerhalb des Computernetzwerks (10) ist,
- eine Überwachungseinheit (170) zur Überwachung des Netzwerkdatenverkehrs,
- zumindest eine Anomalie-Detektionseinheit (111, 112, 11N), die zur Bestimmung eines ersten Zustandswerts geeignet ist, welcher ein Maß für die Wahrscheinlichkeit eines anomalen Betriebszustands innerhalb des Computernetzwerks (10) ist,
- eine Kollaborationseinheit (150), geeignet zur Bestimmung eines dritten Zustandswerts aus dem ersten Zustandswert und dem zweiten Zustandswert, und
- Bestimmungsmitteln zum Bestimmen, ob ein anomaler Betriebszustand aufgetreten ist, in Abhängigkeit von dem dritten Zustandswert, **dadurch gekennzeichnet, dass** die Kollaborationseinheit (150) geeignet ist, den dritten Zustandswert zu bestimmen durch
- Bestimmen eines Durchschnittswerts der zweiten Zustandswerte,
- Gewichten des ersten Zustandswerts mit einem ersten Gewichtungsfaktor,
- Gewichten des Durchschnittswerts mit einem zweiten Gewichtungsfaktor, und
- Addieren des gewichteten ersten Zustandswerts und des gewichteten Durchschnittswerts, um dadurch den dritten Zustandswert zu erhalten.

21. Einrichtung nach Anspruch 20, wobei jede Anomalie-Detektionseinheit (111, 112, 11N) und die Kollaborationseinheit (10) jeweils geeignet sind, automatisch zu vorbestimmten Zeitpunkten erste und dritte Zustandswerte zu bestimmen.

22. Einrichtung nach Anspruch 20 oder 21, wobei jede Anomalie-Detektionseinheit (111, 112, 11N) geeignet ist, erste Zustandswerte mittels eines Algorithmus auf der Grundlage eines künstlichen Immunsystems zu bestimmen.

23. Einrichtung nach Anspruch 22, geeignet, um für jede Anomalie-Detektionseinheit einen Verkehrsdatenvektor aus überwachtem Netzwerkverkehr zu bestimmen, wobei jede der Vektorkomponenten des Verkehrsdatenvektors zu einem vorbestimmten Merkmal des überwachten Netzwerkdatenverkehrs zugehörig ist, und umfassend Speichermittel zur Speicherung einer Menge von Referenzvektoren (121, 122, 12N), die zu einem anomalen Betriebszustand gehören, für jede Anomalie-Detektionseinheit (111, 112, 11N), wobei jede Anomalie-Detektionseinheit (111, 112, 11N) geeignet ist, die Abstände zwischen einem jeweiligen Verkehrsdatenvektor und jedem Referenzvektor jeweils einer der gespeicherten Mengen von Referenzvektoren (121, 122, 12N) mittels eines vorbestimmten Abstandsmaßes zu bestimmen.

24. Einrichtung nach Anspruch 23, umfassend zumindest zwei Anomalie-Detektionseinheiten (111, 112, 11N).

25. Einrichtung nach einem der Ansprüche 23 oder 24, wobei jede Anomalie-Detektionseinheit (111, 112, 11N) einen Zähler umfasst, wobei der Zählerstand den ersten Zustandswert darstellt, und geeignet ist, den Zähler für jeden Referenzvektor zu inkrementieren, für welchen bestimmt wird, dass der Abstand zu dem jeweiligen Verkehrsdatenvektor unterhalb einer vorbestimmten Schwelle liegt.

26. Einrichtung nach Anspruch 25, wobei jede Anomalie-Detektionseinheit (111, 112, 11N) angepasst ist, den Zähler um einen Wert zu inkrementieren, welcher umgekehrt proportional zu dem Abstand ist.

27. Einrichtung nach einem der Ansprüche 23 bis 26, geeignet zur Bestimmung jeder Menge von Referenzvektoren (121, 122, 12N) durch Ausführen der folgenden Schritte:
aa) Bestimmen von Trainingsdaten, welche ein normales Systemverhalten darstellen, durch Überwachen des Netzwerkverkehrs während einer Trainingsphase, wobei die Trainingsdaten mehrere Verkehrsdatenvektoren umfassen,
bb) Erzeugen eines Zufallsdatenvektors,
cc) Vergleichen des Zufallsdatenvektors mit jedem Verkehrsdatenvektor der Trainingsdaten,
dd) Addieren des Zufallsdatenvektors zu der Menge von Referenzvektoren (121, 122, 12N),
wenn er mit keinem der Verkehrsdatenvektoren der Trainingsdaten übereinstimmt, wobei definiert ist, dass Vektoren übereinstimmen, wenn deren Abstand unterhalb einer vorbestimmten Schwelle fällt, und
ee) Wiederholen der Schritte bb) bis dd), bis die Menge von Referenzvektoren (121, 122, 12N) eine vorbestimmte Anzahl von Referenzvektoren umfasst.

28. Einrichtung nach Anspruch 27, geeignet zum Löschen jedes Referenzvektors eines jeden Satzes von Referenzvektoren (121, 122, 12N) nach einer diesem zugehörigen vorbestimmten Lebensdauer und Ersetzen durch einen neuen Referenzvektor, welcher durch Ausführen der Schritte bb) bis ee) bestimmt wird.

29. Einrichtung nach einem der Ansprüche 23 bis 28, wobei jede Anomalitäts-Detektionseinheit (111, 112, 11N) geeignet ist zum
- Auswählen zumindest eines Referenzvektors aus der jeweiligen Menge von Referenzvektoren (121, 122, 12N), für welchen bestimmt wurde, dass der Abstand zu einem Verkehrsdatenvektor unterhalb einer vorbestimmten Schwelle liegt,
- Erzeugen eines modifizierten Vektors durch Modifizieren jeder Vektorkomponente des ausgewählten Referenzvektors um einen zufälligen Betrag, welcher innerhalb eines vorbestimmten Bereichs liegt, und
- Addieren des modifizierten Vektors zu der jeweiligen Menge von Referenzvektoren (121, 122, 12N).

30. Einrichtung nach einem der vorhergehenden Ansprüche, geeignet zur Erzeugung eines Alarmsignals, wenn der dritte Zustandswert eine vorbestimmte Schwelle übersteigt.

31. Einrichtung nach einem der vorhergehenden Ansprüche, geeignet zur Übertragung des ersten und/oder dritten Zustandswerts mittels einer Peer-to-Peer-Kommunikation an zumindest eine weitere vorbestimmte Datenverarbeitungseinrichtung (102, 103; 101, 103; 101, 102).

32. Einrichtung nach einem der Ansprüche 23 bis 31, geeignet, in Ansprechen auf die Bestimmung, dass ein anomaler Betriebszustand aufgetreten ist, den dritten Zustandswert und die jeweiligen Referenzvektoren, welche zu dem anomalen Betriebszustand zugehörig sind, an den zumindest einen vorbestimmten anderen Datenverarbeitungsknoten (102, 103; 101, 103; 101, 102) zu übertragen.

33. Computernetzwerk (10) mit einer Vielzahl von Datenverarbeitungsknoten (101-103, 201, 202, 210), welche zum Zweck der Datenkommunikation miteinander verbunden sind,
wobei zumindest zwei der Datenverarbeitungsknoten (101-103) als Anomalie-Detektionseinrichtungen nach einem der Ansprüche 20 bis 32 vorgesehen ist.

34. Computernetzwerk nach Anspruch 33, des Weiteren umfassend einen zentralen Verwaltungsknoten (210), geeignet zum Empfang von Alarmsignalen von den Anomalie-Detektionseinrichtungen (101-103).

35. Computernetzwerk nach Anspruch 33 oder 34, wobei die Anomalie-Detektionseinrichtungen (101-103) geeignet sind, mittels Peer-to-Peer-Kommunikation zu kommunizieren.

36. Computernetzwerk nach Anspruch 35, wobei jede der Anomalie-Detektionseinrichtungen (101-103) für den Betrieb als Masterknoten zur Peer-to-Peer-Kommunikation geeignet ist, wobei der Masterknoten geeignet ist, eine Liste aller Anomalie-Detektionseinrichtungen (101-103), welche mit dem Computernetzwerk (10) verbunden sind, bereitzustellen.

## Revendications

1. Procédé de détection d'une opération anormale dans une réseau informatique (10) avec une pluralité de noeuds de traitement de données (101-103, 201, 202, 210) liés entre eux aux fins de la communication des données, dans lequel
a) une première valeur d'état est déterminée par un premier noeud de traitement de données (101; 102; 103) du réseau informatique (10), la valeur étant une mesure d'une probabilité d'une opération anormale,
b) une seconde valeur d'état est déterminée par au moins un second noeud de traitement de données (102, 103; 101, 103; 101, 102) du réseau informatique (10), la valeur étant une mesure d'une probabilité d'une opération anormale,
c) ladite seconde valeur d'état est transmise de l'au moins un second noeud de traitement de données (102, 103; 101, 103; 101, 102) au premier noeud de traitement de données 102; 103) via une communication pair à pair,
d) une troisième valeur d'état est déterminée par le premier noeud de traitement de données (101; 102; 103) à partir des valeurs d'état première et seconde, et
e) il est déterminé en fonction de la troisième valeur d'état si une opération anormale s'est produite,
**caractérisé en ce que** l'étape de déterminer ladite troisième valeur d'état comprend les étapes de
- déterminer une valeur moyenne desdites secondes valeurs d'état,
- pondérer la première valeur d'état avec un premier facteur de pondération,
- pondérer ladite valeur moyenne avec un second facteur de pondération, et
- additionner la première valeur d'état pondérée et la valeur moyenne pondérée, afin d'obtenir ladite troisième valeur d'état.

2. Procédé selon la revendication 1, dans lequel les étapes a) à e) sont répétées à des moments prédéfinis.

3. Procédé selon la revendication 1 ou 2, dans lequel la détermination de ladite première valeur d'état est effectuée par un algorithme basé sur un système immunitaire artificiel.

4. Procédé selon la revendication 3, comprenant en outre l'étape de stocker, dans le premier noeud de traitement de données, au moins un ensemble de vecteurs de référence associés avec une opération anormale,
l'étape de déterminer ladite valeur d'état comprenant les étapes de
- surveiller le trafic des données dans le réseau,
- déterminer au moins un vecteur de données trafic à partir du trafic réseau surveillé, chacun des composants dudit vecteur de données trafic étant associé avec une caractéristique respective prédéfinie du trafic réseau surveillé,
- déterminer les distances entre chaque vecteur de données trafic et chaque vecteur de référence d'un ensemble respectif des ensembles de vecteurs de références (121, 122, 12N) stockés, au moyens d'une mesure de distance prédéfinie.

5. Procédé selon la revendication 4, dans lequel au moins deux ensembles différents de vecteurs de reference (121, 122, 12N) sont stockés et au moins deux vecteurs de données trafic différents sont déterminés.

6. Procédé selon la revendication 4 or 5, dans lequel la mesure de distance prédéfinie est la distance de Hamming ou la distance euclidienne.

7. Procédé selon l'une quelconque des revendications 4 à 6, dans lequel la première valeur d'état est représentée par un compteur et dans lequel ledit compteur est incrémenté pour chaque vecteur de référence pour lequel la distance au vecteur de données trafic respectif est déterminé à être inférieure à un seuil prédéfini.

8. Procédé selon la revendication 7, dans lequel ledit compteur est incrémenté par une valeur inversement proportionnelle à ladite distance.

9. Procédé selon l'une quelconque des revendications 4 à 8, dans lequel chaque ensemble de vecteurs de référence (121, 122, 12N) est initialement déterminé par le premier noeud de traitement (101; 102; 103) en exécutant les étapes consistant à :
aa) déterminer des données de formation représentant le comportement normal du système, en surveillant, pendant une phase de formation, le trafic réseau, les données de formation comprenant une pluralité de vecteurs de données trafic,
bb) générer un vecteur de données aléatoires,
cc) comparer ledit vecteur de données aléatoires avec chaque vecteur de données trafic desdites données de formation,
dd) ajouter ledit vecteur de données aléatoires à l'ensemble de vecteurs de référence (121, 122, 12N), s'il ne correspond à aucun des vecteurs de données trafic des données de formation, étant défini que des vecteurs correspondent si la distance entre eux est inférieure à un seuil prédéfini, et
ee) répéter les étapes bb) à dd) jusqu'à l'ensemble de vecteurs de référence (121, 122, 12N) comprend un nombre prédéfini de vecteurs de référence.

10. Procédé selon la revendication 9, dans lequel chaque vecteur de référence de chaque ensemble de vecteurs de référence (121, 122, 12N) est associé avec une durée de vie après laquelle le vecteur est supprimé de l'ensemble (121, 122, 12N) et remplacé par un nouveau vecteur de référence déterminé en exécutant les étapes bb) à ee).

11. Procédé selon l'une quelconque des revendications 4 à 10, en outre comprenant les étapes suivants:
- sélectionner au moins un vecteur de référence pour lequel la distance à un vecteur de données trafic est déterminé à être inférieur à un seuil prédéfini,
- générer au moins un vecteur modifié en modifiant chaque composant du vecteur de référence sélectionné avec une valeur aléatoire dans une plage prédéfinie, et
- ajouter ledit vecteur modifié à l'ensemble respectif des vecteurs de référence (121, 122, 12N).

12. Procédé selon l'une quelconque des revendications précédentes, dans lequel ledit premier facteur de pondération est plus grand que ledit second facteur de pondération.

13. Procédé selon l'une quelconque des revendications précédentes, dans lequel la somme des facteurs de pondération premier et second est 1.

14. Procédé selon l'une quelconque des revendications précédentes, dans lequel le rapport entre le premier et le second facteur de pondération essentiellement est de 60:40, 70:30, 80:20 et 90:10.

15. Procédé selon l'une quelconque des revendications précédentes, dans lequel un signal d'alarme est généré par le premier noeud de traitement de données (101; 102; 103) lorsque la troisième valeur d'état dépasse un seuil prédéfini.

16. Procédé selon la revendication 15, dans lequel ledit signal d'alarme est transmis par le premier noeud de traitement de données (101; 102; 103) à un noeud de surveillance administratif (210).

17. Procédé selon l'une quelconque des revendications précédentes, dans lequel chaqune des valeurs d'état secondes est déterminée par le second noeud de traitement de données (102, 103; 101, 103; 101, 102) respectif comme défini pour la première valeur d'état selon l'une quelconque des revendications 3 à 11.

18. Procédé selon l'une quelconque des revendications précédentes, dans lequel chaqune des valeurs d'état secondes est déterminée par le second noeud de traitement de données (102, 103; 101, 103; 101, 102) respectif comme défini pour la troisième valeur d'état selon l'une quelconque des revendications 12 à 15.

19. Procédé selon l'une quelconque des revendications 4 à 18, dans lequel le premier noeud de traitement de données (101; 102; 103) transmet, en réponse à la détermination qu'une opération anormale s'est produite, la troisième valeur d'état et les vecteurs de référence associés avec l'opération anormale à l'au moins un second noeud de traitement de données (102, 103; 101, 103; 101, 102).

20. Dispositif de traitement de données (101; 102; 103) adapté pour détecter une opération anormale dans un réseau informatique (10), le dispositif comprenant
- un interface réseau (160) adapté pour recevoir, au moyens d'une communication pair à pair, une second valeur d'état qui est une mesure pour la probabilité d'une opération anormale dans un réseau informatique (10) d'au moins un autre dispositif de traitement de données (102, 103; 101, 103; 101, 102)
- une unité de surveillance (170) pour surveiller le trafic des données dans le réseau,
- au moins une unité de détection d'état anormal (111, 112, 11N) adaptée pour déterminer une première valeur d'état qui est une mesure pour la probabilité d'une opération anormale dans un réseau informatique (10),
- une unité de collaboration (150) adaptée pour déterminer une troisième valeur d'état à partir des valeurs d'état première et seconde, et
- moyens pour déterminer, en fonction de la troisième valeur d'état, si une opération anormale s'est produite, **caractérisé en ce que**
l'unité de collaboration (150) est adaptée pour déterminer ladite troisième valeur d'état en
- déterminant une valeur moyenne desdites secondes valeurs d'état,
- pondérant la première valeur d'état avec un premier facteur de pondération,
- pondérant ladite valeur moyenne avec un second facteur de pondération, et
- additionnant la première valeur d'état pondérée et la valeur moyenne pondérée, afin d'obtenir ladite troisième valeur d'état.

21. Dispositif selon la revendication 20, dans lequel chaque unité de détection d'état anormal (111, 112, 11N) et l'unité de collaboration (10) sont respectivement adaptées pour déterminer automatiquement des premières et troisièmes valeurs d'état à des moments prédéfinis.

22. Dispositif selon la revendication 20 ou 21, dans lequel chaque unité de détection d'état anormal (111, 112, 11N) est adaptée pour déterminer des premières valeurs d'état au moyens d'un algorithme basé sur un système immunitaire artificiel.

23. Dispositif selon la revendication 22, adapté pour déterminer, pour chaque unité de détection d'état anormal, un vecteur de données trafic à partir du trafic réseau surveillé, chacun des composants dudit vecteur de données trafic étant associé avec une caractéristique prédéfinie respective du trafic réseau surveillé, et comprenant des moyens de stockage pour stocker, pour chaque unité de détection d'état anormal (111, 112, 11N), un ensemble de vecteurs de référence (121, 122, 12N) associé avec une opération anormale, dans lequel
chaque unité de détection d'état anormal (111, 112, 11N) est adaptée pour déterminer les distances entre un vecteur respectif de données trafic et chaque vecteur de référence de l'ensemble respectif des ensembles de vecteurs de références (121, 122, 12N) stockés, au moyens d'une mesure de distance prédéfinie.

24. Dispositif selon la revendication 23, comprenant au moins deux unités de détection d'état anormal (111, 112, 11N).

25. Dispositif selon l'une quelconque des revendications 23 ou 24, dans lequel chaque unité de détection d'état anormal (111, 112, 11N) comprend un compteur, la valeur du compteur représentant la première valeur d'état, et est adaptée pour incrémenter ledit compteur pour chaque vecteur de référence pour lequel la distance au vecteur respectif de données trafic est déterminé à être inférieure à un seuil prédéfini.

26. Dispositif selon la revendication 25, dans lequel chaque unité de détection d'état anormal (111, 112, 11N) est adaptée pour incrémenter ledit compteur par une valeur inversement proportionnelle à ladite distance.

27. Dispositif selon l'une quelconque des revendications 23 à 26, adapté pour déterminer chaque ensemble de vecteurs de référence (121, 122, 12N) en exécutant les étapes consistant à
aa) déterminer des données de formation représentant le comportement normal du système, en surveillant, pendant une phase de formation, le trafic réseau, les données de formation comprenant une pluralité de vecteurs de données trafic,
bb) générer un vecteur de données aléatoires,
cc) comparer ledit vecteur de données aléatoires avec chaque vecteur de données trafic desdites données de formation,
dd) ajouter ledit vecteur de données aléatoires à l'ensemble de vecteurs de référence (121, 122, 12N), s'il ne correspond à aucun des vecteurs de données trafic des données de formation, étant défini que des vecteurs correspondent si la distance entre eux est inférieure à un seuil prédéfini, et ee) répéter les étapes bb) à dd) jusqu'à l'ensemble de vecteurs de référence (121, 122, 12N) comprend un nombre prédéfini de vecteurs de référence.

28. Dispositif selon la revendication 27, adapté pour supprimer chaque vecteur de référence de chaque ensemble de vecteurs de référence (121, 122, 12N) après une durée de vie prédéfinie et pour le remplacer avec un nouveau vecteur de référence qui est déterminé en exécutant les étapes bb) à ee).

29. Dispositif selon l'une quelconque des revendications 23 à 28, dans lequel chaque unité de détection d'état anormal (111, 112, 11N) est adaptée pour
- sélectionner au moins un vecteur de référence de l'ensemble respectif de vecteurs de référence (121, 122, 12N) pour lequel la distance à un vecteur de données trafic est déterminé à être inférieure à un seuil prédéfini,
- générer un vecteur modifié en modifiant chaque composant du vecteur de référence sélectionné avec une valeur aléatoire dans une plage prédéfinie, et
- ajouter ledit vecteur modifié à l'ensemble respectif des vecteurs de référence (121, 122, 12N).

30. Dispositif selon l'une quelconque des revendications précédentes, adapté pour générer un signal d'alarme lorsque la troisième valeur d'état dépasse un seuil prédéfini.

31. Dispositif selon l'une quelconque des revendications précédentes, adapté pour transmettre la première et/ou la troisième valeur d'état à au moins un autre dispositif de traitement des données prédéfini (102, 103; 101, 103; 101, 102) au moyens d'une communication pair à pair.

32. Dispositif selon l'une quelconque des revendications 23 à 31, adapté pour transmettre, en réponse à la détermination qu'une opération anormale s'est produite, la troisième valeur d'état et les vecteurs respectifs de référence associés avec l'opération anormale à au moins un autre dispositif de traitement de données (102, 103; 101, 103; 101, 102) prédéfini.

33. Réseau informatique (10) avec une pluralité de noeuds de traitement de données (101-103, 201, 202, 210) liés entre eux aux fins de la communication des données,
dans lequel au moins deux des noeuds de traitement des données (101-103) sont prévus en tant que dispositifs de détection d'état anormal selon l'une des revendications 20 à 32.

34. Réseau informatique selon la revendication 33, en outre comprenant un noeud central administratif (210) adapté à recevoir des signaux d'alarme desdits dispositifs de détection d'état anormal (101-103).

35. Réseau informatique selon la revendication 33 ou 34, dans lequel lesdits dispositifs de détection d'état anormal (101-103) sont adaptés pour communiquer au moyens d'une communication pair à pair.

36. Réseau informatique selon la revendication 35, dans lequel chacun desdits dispositifs de détection d'état anormal (101-103) est adapté pour fonctionner en tant que noeud maître pour la communication pair à pair, ledit noeud maître étant adapté pour fournir une liste de tous les dispositifs de détection d'état anormal (101-103) liés au réseau informatique (10).
